**Europäisches Patentamt**

**European Patent Office**

**Office européen des brevets**

(19)

(11) Veröffentlichungsnummer: **0 053 229**
**B1**

(12) **EUROPÄISCHE PATENTSCHRIFT**

(45) Veröffentlichungstag der Patentschrift:
**10.04.85**

(51) Int. Cl.⁴: **H 02 H 3/26**

(21) Anmeldenummer: **81107059.8**

(22) Anmeldetag: **08.09.81**

(54) Verfahren und Schaltungsanordnung zur Erfassung und Abschaltung von Störlichtbögen.

(30) Priorität: 01.12.80 DD 225584
23.12.80 DD 226527
06.03.81 DD 228104

(43) Veröffentlichungstag der Anmeldung:
09.06.82 Patentblatt 82/23

(45) Bekanntmachung des Hinweises auf die Patenterteilung:
10.04.85 Patentblatt 85/15

(84) Benannte Vertragsstaaten:
AT CH DE FR LI SE

(56) Entgegenhaltungen:
DE - A - 1 588 515
DE - A - 1 941 664
DE - A - 2 216 238

C. ROTHE "Relaisschutztechnik in Elektroenergiesystemen" 1980, VEB VERLAG TECHNIK, Berlin Seite 255

(73) Patentinhaber: **VEB Starkstrom-Anlagenbau Leipzig-Halle, Humboldtstrasse 2a, DDR-701 Leipzig (DE)**

(72) Erfinder: **Kindler, Peter, Kirschbergstrasse 76, DDR-7022 Leipzig (DD)**
Erfinder: **Schulz, Reinhold, Asternweg 38, DDR-7060 Leipzig (DD)**
Erfinder: **Wiessner, Rolf, Lange Reihe 24, DDR-7027 Leipzig (DD)**

(74) Vertreter: **Patentanwälte Beetz sen. - Beetz jun. Timpe - Siegfried - Schmitt-Fumian, Steinsdorfstrasse 10, D-8000 München 22 (DE)**

## Beschreibung

Die Erfindung bezieht sich auf ein Verfahren zur Erfassung und zur Abschaltung von Störlichtbögen in Sammelschienenanlagen; sie bezieht sich ferner auf eine Schaltungsanordnung zur Erfassung und gegebenenfalls zur Abschaltung von Störlichtbögen in solchen Anlagen.

Es ist bekannt, zur Erfassung und Abschaltung eines Störlichtbogens in elektrotechnischen Anlagen die mit dem Lichtbogen verbundene Lichtwirkung oder die dabei entstehende Druckwelle zur Signalgabe zu nutzen. Für die Ausnutzung der Lichtwirkung sind Lösungen bekannt, bei denen optoelektronische Bauelemente eingesetzt sind, die vor Inbetriebnahme der Anlage auf die dem Störlichtbogen eigene Lichtwirkungsgrösse eingestellt werden. Nach Entstehen eines Störlichtbogens erfolgt mittels Fotodioden oder Fototransistoren eine Signalgabe an eine Schutzeinrichtung, die innerhalb kurzer Zeit die Abschaltung der Anlage bewirkt (DE-A-2 216 238).

Die Nachteile dieses Verfahrens bestehen in erster Linie darin, dass zur Ausrüstung einer elektrotechnischen Anlage eine Vielzahl von optoelektronischen Bauelementen erforderlich ist, da jedes Schaltfeld der Anlage gesondert überwacht werden muss.

Zum anderen ist darüberhinaus aufgrund der hohen Packungsdichte und der starken Verschachtelung der Schaltfelder der Einsatz mehrerer Fotodioden bzw. Fototransistoren notwendig, die möglichst weit an die Sammelschienen herangeführt werden müssen. Die dadurch bedingten grossen Leitungslängen wirken sich nicht nur hinsichtlich des Materialverbrauchs nachteilig aus, sie können auch durch das Einwirken elektromagnetischer Felder zu Störungen an den optoelektronischen Bauelementen führen.

Eine weitere wesentliche Beeinträchtigung der Funktionssicherheit entsteht dadurch, dass die Ansprechschwelle der optoelektronischen Bauelemente relativ hoch eingestellt werden muss, um auftretende unvermeidbare Schaltlichtbögen nicht als Störlichtbögen zu erfassen und Fehlabschaltungen zu vermeiden. Dies hat jedoch zur Folge, dass kleine Störlichtbögen, die aufgrund ihrer geringen Lichtwirkung vom optoelektronischen Bauelement nicht erfasst werden, sich uneingeschränkt bis zum Erreichen der Ansprechschwelle vergrössern können. Dadurch erfolgt eine wesentliche Verzögerung der Abschaltzeit, so dass es zur Zerstörung von Anlagenteilen kommen kann. Letztendlich beeinträchtigt auch der Verschmutzungsgrad der optischen Elemente die Funktionssicherheit.

Es sind weiterhin Lösungen bekanntgeworden, die die mit dem Störlichtbogen verbundene Druckwelle zur Signalgabe nutzen, wobei mittels Druckentlastungsklappen, die in den Gehäusewandungen der Anlagenteile vorgesehen sind und sich bei Vorliegen der Druckwelle öffnen, Schalter betätigt werden, die ein Abschalten der Anlage bewirken.

Die Nachteile dieser Lösungen sind einmal in der Zeitverzögerung zwischen Auftreten des Störlichtbogens und Ausbreiten der Druckwelle begründet, was eine Verlängerung der Abschaltzeit mit sich bringt. Zum anderen setzt eine Kopplung mit mechanisch beweglichen Teilen die Zuverlässigkeit der Signalübertragung herab.

Aus dem Buch von C. Rothe «Relaisschutztechnik in Elektroenergiesystemen» (1980, Veb Verlag Technik, Berlin) ist eine Schutzkonzeption für gasisolierte elektrotechnische Schaltanlagen, die durch Störlichbögen gefährdet sind, bekannt. Die Störlichtbögen werden mittels einer Kombination von Nullspannungs- die in UND-Verknüpfung auf Abschaltung der Anlage wirken. Es sind auch Filtereinrichtungen zur Blockierung von kapazitiven Einwirkungen vorgesehen (siehe Seite 255, Abschnitt 10.3.3). Zur Überwachung der überwiegend auftretenden mehrpoligen Störlichtbögen ist diese Methode allerdings prinzipiell nicht geeignet.

Der Erfindung liegt die Aufgabe zugrunde, ein Verfahren und eine Vorrichtung zur Erfassung und Abschaltung von Störlichtbögen in Sammelschienenanlagen anzugeben, bei denen andere und geeignetere physikalische Grössen eines Störlichtbogens zur sicheren Erfassung und Erreichung kürzester Abschaltzeiten technisch genutzt werden.

Die Aufgabe wird gemäss Anspruch 1 bzw. 2 gelöst.

Vorteilhafte Weiterbildungen sind Gegenstand der Unteransprüche.

Mit der Weiterbildung der Erfindung gemäss den Ansprüchen 3 und 4 wird zusätzlich noch die Aufgabe gelöst, den Ort des Störlichtbogens genau zu lokalisieren.

Auf der Grundlage konstruktiver Parameter der elektrotechnischen Anlage, wie Abstand der Sammelschienen zueinander bzw. Abstand der Sammelschienen zum Gehäuse, werden also zunächst Lichtbogenspannungsgrössen, die von ihrer Länge abhängig sind, experimentell ermittelt und als Ansprechschwellen voreingestellt. Als weiteres Kriterium für das Erfassen eines Störlichtbogens wird der Frequenzgehalt dieser Spannungen hinsichtlich der einer Lichtbogenspannung eigenen Oberwelligkeit ausgewertet. Ein drittes Kriterium bildet das Vorliegen eines Lichtbogenstroms, der durch die Kurzschlussleistung der Anlage bestimmt wird. Durch logische UND-Verknüpfung dieser Signale wird das Ausgangssignal zur Abschaltung gebildet.

In näherer Ausgestaltung des Verfahrens wird weiterhin vorgeschlagen, dass die Sammelschienenspannung mittels Spannungswandler und Gleichrichter in eine äquivalente Gleichspannung umgeformt und durch ein Filter von den durch die Gleichrichtung hervorgerufenen Oberwellen befreit wird. Die am Ausgang dieses Filters anliegende Spannung wird einerseits auf ein zweites Filter geführt, so dass nur die Oberwellen, deren Frequenz oberhalb der durch Gleichrichtung hervorgerufenen Oberwellen liegt, verstärkt und auf einen Trigger weitergeleitet werden, der beim Überschreiten einer bestimmten Amplitude der Oberwellen ein Signal auf das UND-Glied freigibt. Zur Auswertung der Spannungsgrösse wird andererseits die am Ausgang des ersten Filters anliegende Spannung auf einen Diskriminator geführt, in welchem ein Vergleich der anliegenden Spannung mit dem für einen möglichen Störlichtbogen experimentell ermittelten und voreingestellten Spannungsbereich durchgeführt wird, wobei ein Signal nur dann an das UND-Glied weitergeleitet wird, wenn sich die anliegende Spannung im Bereich dieser voreingestellten Spannungsgrössen befindet. Analog zum Vergleich der Spannungsgrösse erfolgt ein Stromvergleich, wobei die Sammelschienenströme mit einem Stromwandler und einem weiteren Gleichrichter in äquivalente Gleichspannungen umgewandelt und durch einen Schwellwertschalter dahingehend ausgewertet werden, dass bei Erreichen bzw. Überschreiten einer ausgehend von der Kurzschlussleistung der Anlage errechneten, dem Lichtbogenstrom entsprechenden Grösse ein Signal freigegeben und zum einen auf das UND-Glied weitergeleitet wird. Zum anderen wird dieses Signal bei Überwachung einzelner Anlagenteile in der Weise zur selektiven Abschaltung genutzt, dass es über einen Negator, der dieser Überwachungseinheit unmittelbar vorgeschalteten Überwachungseinheit zur Freigabe oder Blockierung zugeführt wird, so dass am Ausgang des UND-Glieds einer jeden Überwachungseinheit ein Signal zur Schutzauslösung in dem betreffenden Schaltfeld nur dann ansteht, wenn gleichzeitig die Signale der Spannungsauswertung, das Signal der Stromauswertung und das negierte Signal der Stromauswertung der nachgeschalteten Überwachungseinheit L-Signale sind, die einen Lichtbogen im betreffenden Anlagenteil signalisieren.

Dieses Verfahren bzw. diese Schaltungsanordnung hat im Vergleich zu den bekannten technischen Lösungen wesentliche Vorteile.

Neben der Verringerung des Aufwands gegenüber den optoelektronischen Überwachungseinheiten wird eine weitgehende Verbesserung der Funktionssicherheit erreicht, die Fehlabschaltungen bzw. Zerstörungen von Anlagenteilen und Gefährdung des Bedienungspersonals nahezu ausschliesst.

Es ist zwar bereits durch die DE-A-2 559 100 sowie die DE-A-2 849 828 bekannt, die im Zusammenhang mit der Entstehung von Lichtbögen auftretenden hochfrequenten Schwingungen zur Indikation und Auswertung heranzuziehen. Diese Lösungen beziehen sich aber bezüglich ihrer Anwendung auf elektrische Freileitungen bzw. Fahrleitungen und ihre Armaturen. Sie sind auch für den Einsatz in elektrischen Anlagen (Schaltschränken) unzureichend, weil sie Rückwirkungen beim Betrieb von Thyristoren als Störlichtbögen interpretieren würden, die bei ungestörtem Betrieb zur Abschaltung der Anlage führen.

Im folgenden wird die Erfindung anhand von Ausführungsbeispielen unter Bezug auf die Figuren näher erläutert.

Es zeigen:

Fig. 1: Ein Blockschaltbild zur Erläuterung des erfindungsgemässen Verfahrens zur Erfassung von Störlichtbögen,

Fig. 2: eine erfindungsgemässe Schaltungsanordnung und

Fig. 3 bis 5: Signaldiagramme zu Signalverläufen nach Fig. 2.

Es wird davon ausgegangen, dass konstruktive Parameter, wie Abstand der Sammelschienen zueinander bzw. Abstand der Sammelschienen zum Gehäuse, Grundlagen für experimentell zu ermittelnde Lichtbogenspannungsgrössen sind, die von der Länge des Lichtbogens abhängig sind. Die so ermittelten Spannungsgrössen werden in entsprechenden Bauelementen als Ansprechschwellen voreingestellt und ständig mit den Momentanwerten der Sammelschienenspannung verglichen. Parallel dazu werden die Frequenzen der Sammelschienenspannung über geeignete Bauelemente hinsichtlich einer der Lichtbogenspannung eigenen Oberwelligkeit überwacht. Des weiteren erfolgt eine Überwachung des Sammelschienenstroms in der Art, dass aufgrund der Kurzschlussleistung der Anlage ermittelte Grössen eines möglichen Lichtbogenstroms als Ansprechschwelle für die parallel zu den Spannungsvergleichen vorgenommenen Stromvergleiche dienen. Über eine logische UND-Verknüpfung dieser Signale wird das Ausgangssignal zur Abschaltung gebildet. Werden bei elektrotechnischen Anlagen einzelne Anlagenteile überwacht, so ist nach den Leistungsschaltern für jeden der Anlagenteile jeweils eine erfindungsgemässe Überwachungseinheit vorgesehen.

Das Verfahren soll am Beispiel einer Überwachungseinheit dargelegt werden.

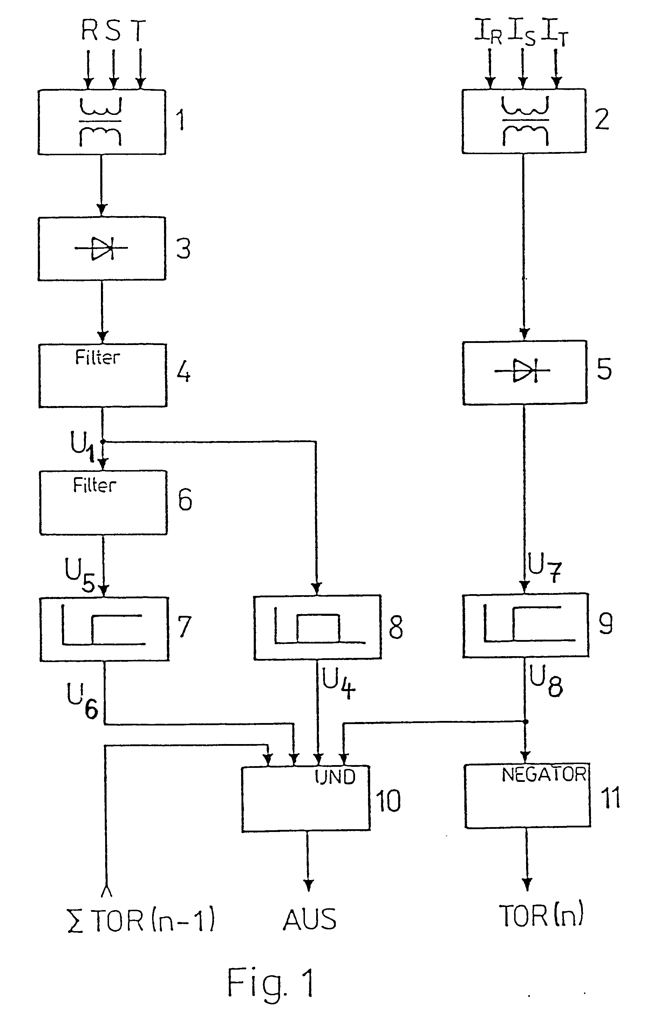

Wie in Fig. 1 dargestellt, ist die über Spannungswandler 1 und Gleichrichter 3 in eine Gleichspannung umgeformte Sammelschienenspannung $U_R$, $U_S$, $U_T$ auf ein Filter 4 geschaltet, das die durch die Gleichrichtung hervorgerufenen Oberwellen dämpft. Das am Ausgang des Filters 4 anliegende erste Ausgangssignal $U_1$ wird zur Überwachung der Frequenz auf ein zweites Filter 6 geführt, das nur die Oberwellen verstärkt und weiterleitet, deren Frequenzen oberhalb der durch Gleichrichtung entstehenden Oberwellen liegen. Dieses zweite Ausgangssignal $U_5$ des Filters 6 wird auf einen ersten Schwellwertschalter 7 geführt, der beim Überschreiten einer bestimmten Amplitude der Oberwellen ein drittes Ausgangssignal $U_6$ auf das UND-Glied 10 freigibt. Zur Überwachung der Spannungsgrösse wird das Signal $U_1$ auf einen Diskriminator 8 geleitet, der beim Vorliegen einer Spannungsgrösse im voreingestellten, experimentell ermittelten Spannungsbereich ein viertes Ausgangssignal $U_4$ auf das UND-Glied 10 gibt. Analog zur Überwachung der Spannungsgrösse werden auch die Sammelschienenströme $I_R$ und/oder $I_S$ und/oder $I_T$ über Stromwandler 2 und nachgeschaltete zweite Gleichrichter 5 in ein äquivalentes Gleichspannungssignal als fünftes Ausgangssignal $U_7$ umge-

formt. Mit einem zweiten Schwellwertschalter 9 wird die Grösse dahingehend überwacht, dass bei Erreichen oder Überschreiten einer durch die Kurzschlussleistung der Anlage bestimmbaren, der Stromstärke eines Störlichtbogens entsprechenden, einstellbaren äquivalenten Spannungsgrösse ein sechstes Ausgangssignal $U_8$ auf das UND-Glied 10 weitergeleitet wird. Parallel dazu ist das Signal $U_8$ auf einen Negator 11 geschaltet, dessen Ausgang TOR (n) zur Freigabe oder Blokkierung der jeweils vorgeschalteten Überwachungseinheit dient, so dass ein selektives Abschalten von Anlagenteilen gewährleistet ist. Bei gleichzeitigem Vorliegen der Signale $U_4$, $U_6$ und $U_8$ und des durch die nachgeschalteten Überwachungseinrichtungen zur selektiven Abschaltung gebildeten Signals TOR (n–1) wird durch das UND-Glied 10 ein Signal AUS gebildet, das zur Abschaltung des entsprechenden Anlagenteils genutzt wird.

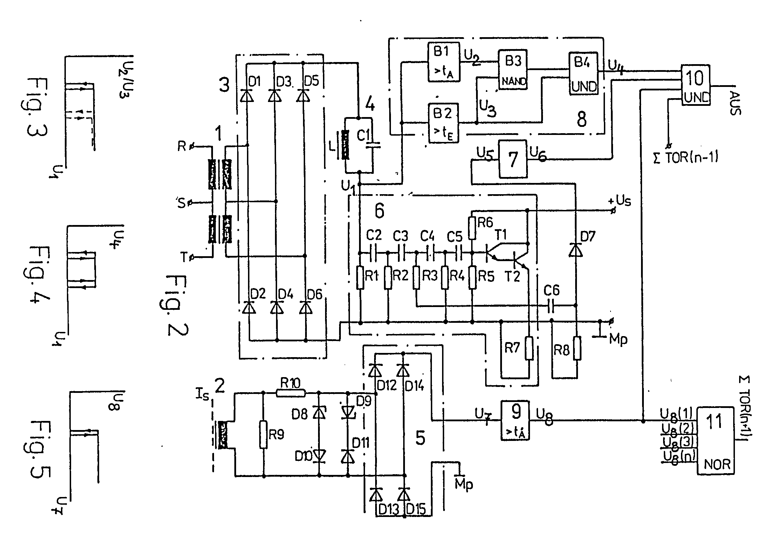

In Fig. 2 ist eine jedem Leistungschalter zugeordnete Schaltungsanordnung dargestellt. An die Sammelschienen R, S, T sind zwei Spannungswandler 1 angeschlossen, deren sekundärseitige Klemmen auf einen Sechspulsgleichrichter 3, bestehend aus den Dioden D1 bis D6, geführt sind. An das Kathodentripel D1, D3, D5 des Sechspulsgleichrichters 3 ist ein Filter 4, bestehend aus der Induktivität L und einem Kondensator C1, das als Schwingkreis ausgebildet ist, angeschlossen, wobei dieser Schwingkreis über den Widerstand R1 auf den Mp der Schaltung geschaltet ist, der vom Anodentripel D2, D4, D6 des Sechspulsgleichrichters 3 gebildet wird. An den Widerstand R1 ist das Filter 6 geschaltet, das mit Widerständen R1–R7, den Transistoren T1, T2 und den Kondensatoren C2–C5 als Hochpass ausgebildet ist. Der Ausgang des Filters 6 ist über ein RC-Glied R8, C6 und eine Diode D7 auf einen ersten Schwellwertschalter 7 geschaltet, der die Auswertung der Amplitude der Oberwellen vornimmt. Weiterhin sind an den Widerstand R1 zwei Trigger B1, B2 geschaltet, die einen unterschiedlichen Ansprechwert besitzen, wobei der Trigger B1 mit dem oberen Ansprechwert eine Ausschaltverzögerung $t_A$ und der Trigger B2 mit dem unteren Ansprechwert eine Einschaltverzögerung $t_E$ besitzt. Die Ausgangssignale $U_2$ und $U_3$ der Trigger B1 und B2 werden über ein NAND-Glied B3 und UND-Glied B4 zu einem Ausgangssignal U4 logisch verknüpft. Die Ausgangssignale U4 und U6 des UND-Glieds B4 und des Schwellwertschalters 7 werden auf ein UND-Glied 10 geführt.

Zur übersichtlichen Darstellung des Ausführungsbeispiels wird der Stromvergleich am Beispiel einer Sammelschiene dargestellt. Der Sammelschienenstrom wird über einen Stromwandler 2, der auf eine Bürde R9 geschaltet ist, und über einen Überspannungsschutz (R10, D8 bis D11) auf einen Gleichrichter 5, bestehend aus den Dioden D12 bis D15, geführt.

Das Ausgangssignal $U_7$ des Gleichrichters 5 wird auf den Schwellwertschalter 9, der eine Ausschaltverzögerung $t'_A$ besitzt, geschaltet, der

bei Erreichen bzw. Überschreiten der ausgehend von der Kurzschlussleistung der Anlage ermittelten, dem Lichtbogenstrom entsprechenden voreingestellten Grössen ein Ausgangssignal $U_8$ bildet, das einmal auf das UND-Glied 10 und zum anderen auf ein NOR-Glied 11 geführt ist. Durch das NOR-Glied 11 wird das Selektivitätssignal TOR (n+1) für die vorgeordnete Überwachungseinheit gebildet. Auf das UND-Glied 10 wird ein Selektivitätssignal TOR (n–1) geschaltet, das vom entsprechenden NOR-Glied der nachgeschalteten Überwachungseinheit gebildet wird. Das Ausgangssignal AUS des UND-Glieds 10 wird zur Schutzauslösung benutzt. In den Fig. 3 bis 5 sind ausgewählte Signalverläufe einzelner Baugruppen dargestellt.

**Patentansprüche**

1. Verfahren zur Erfassung und Abschaltung von Störlichtbögen in Sammelschienenanlagen, gekennzeichnet durch
- ständige Erfassung der Sammelschienenspannung und Vergleich mit experimentell ermittelten, durch die anlagenbedingte Lichtbogenlänge bestimmten Spannungs-Grenzwerten, die einen entsprechenden Spannungsbereich vorgeben,
- ständige Erfassung des Sammelschienenstroms und Vergleich mit einem experimentell ermittelten, durch die anlagenbedingte Kurzschlussleistung bestimmten, vorgegebenen Strom-Grenzwert,
- ständige Erfassung des Oberwellengehalts der Sammelschienenspannung und Vergleich mit einem vorgegebenen Grenzwert und
- Abschaltung, wenn gleichzeitig Sammelschienenstrom und Amplitude der Oberwellen der Sammelschienenspannung oberhalb der vorgegebenen Grenzwerte und die Sammelschienenspannung innerhalb des vorgegebenen Spannungsbereichs liegen.

2. Vorrichtung zur Erfassung und Abschaltung von Störlichtbögen in Sammelschienenanlagen nach dem Verfahren gemäss Anspruch 1, gekennzeichnet durch

- Spannungswandler (1) und nachgeschaltete erste Gleichrichter (3), die die Sammelschienenspannung ($U_R$, $U_S$, $U_T$) in eine äquivalente Gleichspannung umformen,
- ein erstes Filter (4), das die Gleichspannung von den durch die ersten Gleichrichter (3) hervorgerufenen Oberwellen befreit und ein erstes Ausgangssignal ($U_1$) liefert,
- ein nach dem ersten Filter (4) vorgesehenes, als Hochpass ausgebildetes zweites Filter (6), das nur die Oberwellen verstärkt, deren Frequenzen oberhalb der Frequenz der durch die Gleichrichtung in den ersten Gleichrichtern (3) entstehenden Oberwellen liegen, und ein entsprechendes zweites Ausgangssignal ($U_5$) abgibt,
- einen dem zweiten Filter (6) nachgeschalteten ersten Schwellwertschalter (7), der ein drittes Ausgangssignal ($U_6$) abgibt, wenn die Amplitude

des zweiten Ausgangssignals ($U_5$) einen vorgegebenen Grenzwert überschreitet,

– einen Diskriminator (8), der das erste Ausgangssignal ($U_1$) des ersten Filters (4) zugeführt erhält und ein viertes Ausgangssignal ($U_4$) abgibt, wenn die der Sammelschienenspannung ($U_R$, $U_S$, $U_T$) entsprechende Spannung innerhalb eines vorgegebenen Bereichs liegt,

– Stromwandler (2) und nachgeschaltete zweite Gleichrichter (5), die den Sammelschienenstrom ($I_R$, $I_S$, $I_T$) in ein äquivalentes fünftes Ausgangssignal ($U_7$) umformen,

– einen nachgeschalteten zweiten Schwellwertschalter (9), der ein sechstes Ausgangssignal ($U_8$) abgibt, wenn das fünfte Ausgangssignal ($U_7$) einen vorgegebenen Grenzwert überschreitet, sowie

– ein erstes UND-Glied (10), das mit den Ausgängen des ersten Schwellwertschalters (7), des Diskriminators (8) und des zweiten Schwellwertschalters (9) verbunden ist und ein Ausgangssignal (AUS) zur Schutzauslösung liefert, wenn gleichzeitig das dritte, vierte und sechste Ausgangssignal ($U_6$, $U_4$, $U_8$) anliegen (Fig. 1).

3. Vorrichtung nach Anspruch 2 zur selektiven Abschaltung von Anlagenteilen, die jeweils durch eine Vorrichtung nach Anspruch 2 geschützt sind, gekennzeichnet durch

– einen dem zweiten Schwellwertschalter (9) nachgeschalteten Negator (11), der das sechste Ausgangssignal ($U_8$) des zweiten Schwellwertschalters (9) zugeführt erhält und dessen Ausgangssignal (TOR[n]) zur Freigabe oder Blockierung der vorgeschalteten Vorrichtung dient, sowie

– ein erstes UND-Glied (10), das ferner ein siebtes Signal (TOR(n–1)) einer nachgeschalteten Vorrichtung zugeführt erhält und bei gleichzeitigem Anliegen des dritten, vierten und sechsten Ausgangssignals ($U_6$, $U_4$, $U_8$) sowie des siebten Signals (TOR[n–1]) der nachgeschalteten Vorrichtung das Ausgangssignal (AUS) zur Schutzauslösung abgibt (Fig. 1).

4. Vorrichtung nach Anspruch 2 oder 3, gekennzeichnet durch

– zwei Spannungswandler (1), die an die Sammelschienen (R, S, T) angeschlossen und deren Sekundäranschlüsse mit einem aus sechs Dioden (D1–D6) bestehenden Sechspulsgleichrichter als erstem Gleichrichter (3) verbunden sind,

– ein aus einem Schwingkreis aus einer Induktivität (L) und einem Kondensator (C1) bestehendes, mit dem Kathodentripel (D1, D3, D5) des ersten Gleichrichters (3) verbundenes erstes Filter (4), das über einen Widerstand (R1) mit dem Mittelpunkt (Mp) der Schaltung verbunden ist, der vom Anodentripel (D2, D4, D6) des ersten Gleichrichters (3) gebildet wird,

– ein zweites Filter (6), das aus Widerständen (R1–R7), Kondensatoren (C2–C5) und Transistoren (T1, T2) besteht,

– ein mit dem Ausgang des zweiten Filters (6) verbundenes RC-Glied (R8, C6), das über eine nachgeschaltete Diode (D7) mit dem ersten Schwellwertschalter (7) verbunden ist, dessen Ausgang mit dem ersten UND-Glied (10) in Verbindung steht,

– zwei Trigger (B1, B2) mit unterschiedlicher Ansprechschwelle, wobei der erste Trigger (B1) die höhere Ansprechschwelle und eine Ausschaltverzögerung ($t_A$) und der zweite Trigger (B2) die niedrigere Ansprechschwelle und eine Einschaltverzögerung ($t_E$) aufweisen,

– ein mit den Ausgängen der Trigger ($B_1$, $B_2$) verbundenes NAND-Glied (B3) und ein diesem nachgeschaltetes, auch mit dem Ausgang des zweiten Triggers (B2) verbundenes zweites UND-Glied (B4), das das vierte Ausgangssignal ($U_4$) zum ersten UND-Glied (10) liefert,

– Stromwandler (2) mit einer Bürde (R9), die den Sammelschienenstrom ($I_R$, $I_S$, $I_T$) erfassen,

– zweite Gleichrichter (5) aus Dioden (D12–D15), die über einen Überspannungsschutz (R10, D8–D11) mit den Stromwandlern (2) verbunden sind,

– mit den zweiten Gleichrichtern (5) verbundene zweite Schwellwertschalter (9) mit einer Ausschaltverzögerung ($t'_A$) die ausgangsseitig mit dem ersten UND-Glied (10) verbunden sind, sowie

– einen aus einem NOR-Glied (11) bestehenden Negator, der die sechsten Ausgangssignale ($U_8$) der zweiten Schwellwertschalter (9) zugeführt erhält und ein Selektivitätssignal (TOR [n+1]) für die vorgeschaltete Vorrichtung erzeugt (Fig. 2).

**Claims**

1. Method for detecting and breaking disturbing electric arcs in bus-bar systems, characterized by

– continually detecting the bus-bar voltage and comparing it with experimentally found critical voltage values which are determined by the system-inherent arc length and which predetermine a corresponding voltage range,

– continually detecting the bus-bar current and comparing it with an experimentally found predetermined critical current value which is determined by the system-inherent short-circuiting power,

– continually detecting the harmonic content of the bus-bar voltage and comparing the same with a predetermined critical value, and

– breaking when the bus-bar current and the amplitude of the harmonics of the bus-bar voltage are simultaneously in excess of the predetermined critical values and the bus-bar voltage is within the predetermined voltage range.

2. Circuit for detecting and breaking disturbing electric arcs in bus-bar systems in accordance with the method claimed in claim 1, characterized by

– voltage transformers (1) and first rectifying circuits (3) connected to the output thereof for transforming the bus-bar voltage ($U_R$, $U_S$, $U_T$) into an equivalent d.c. voltage,

– a first filter circuit (4) for removing from the d.c. voltage the harmonics caused by the first rectifying circuits (3) and for supplying a first output signal ($U_1$),

– a second, high-pass filter circuit (6) provided after the first filter circuit (4) for amplifying only those harmonics whose frequencies are above the frequency of the harmonics produced in the first rectifying circuits (3) due to the rectifying operation, and for supplying a corresponding second output signal ($U_5$),

– a first threshold switch (7) connected to the output of the second filter circuit (6) for supplying a third output signal ($U_6$) when the amplitude of the second output signal ($U_5$) exceeds a predetermined limit value,

– a discriminator circuit (8) to which the first output signal ($U_1$) form the first filter circuit (4) is supplied and which supplies a fourth output signal ($U_4$) when the voltage corresponding to the bus-bar voltage ($U_R$, $U_S$, $U_T$) is within a predetermined range,

– current transformers (2) and second rectifying circuits (5) connected to the outputs thereof for transforming the bus-bar current ($I_R$, $I_S$, $I_T$) into an equivalent fifth output signal ($U_7$),

– a succeeding second threshold switch (9) for supplying a sixth output signal ($U_8$) when the fifth output signal ($U_7$) exceeds a predetermined limit value, and

– a first AND-circuit (10) connected to the outputs of the first threshold switch (7), of the discriminating circuit (8) and of the second threshold switch (9) for supplying an output signal (AUS) to trigger the protective breaking when the third, the fourth and the sixth output signals ($U_6$, $U_4$, $U_8$) are simultaneously applied (Fig. 1).

3. Circuit as claimed in claim 2 for selectively breaking parts of the system which are each protected by a circuit as claimed in claim 2, characterized by

– a NOT-circuit (11) connected to the output of the second threshold switch (9) for being supplied with the sixth output signal ($U_8$) from the second threshold switch (9), the output signal [TOR(n)] of said NOT-circuit being used to enable or to disable the preceding device, and

– a first AND-circuit (10) to which furthermore a seventh signal [TOR(n–1)] from a succeeding device is supplied and which, when the third, the fourth and the sixth output signals ($U_6$, $U_4$, $U_8$) and the seventh signal [TOR(n–1)] from the succeeding device are applied thereto, supplies the output signal (AUS) to trigger the protective breaking (Fig. 1).

4. Circuit as claimed in claim 2 or claim 3, characterized by

– two voltage transformers (1) which are connected to the bus bars (R, S, T) and the secondary terminals of which are connected to a six-pulse rectifier consisting of six diodes (D1–D6) and constituting the first rectifying circuit (3),

– a first filter circuit (4) constituted by a resonant circuit of an inductance (L) and a capacitor (C1) and connected to the cathode triplet (D1, D3, D5) of the first rectifying circuit (3), said filter circuit being connected via a resistor (R1) to the circuit mid-point (Mp) constituted by the anode triplet (D2, D4, D6) of the first rectifying circuit (3),

– a second filter circuit (6) consisting of resistors (R1–R7), capacitors (C2–C5) and transistors (T1, T2),

– an RC-network (R8, C6) connected to the output of the second filter circuit (6) and being connected via a succeeding diode (D7) to the first threshold switch (7) the output of which is connected to the first AND-circuit (10),

– two trigger circuits (B1, B2) having different response levels, the first trigger circuit (B1) having the higher response level and a turn-off delay time ($t_A$) and the second trigger circuit (B2) having the lower response level and a turn-on delay time ($t_E$),

– a NAND-circuit (B3) connected to the outputs of the trigger circuits (B1, B2) and to a second AND-circuit (B4) which is connected to the output of said NAND-circuit and is also connected to the output of the second trigger circuit (B2) and supplies the fourth output signal ($U_4$) to the first AND-circuit (10),

– current transformers (2) with a load (R9) for detecting the bus-bar current ($I_R$, $I_S$, $I_T$),

– second rectifying circuits (5) formed of diodes (D12–D15) which are connected via an overvoltage protection means (R10, D8–D11) to the current transformers (2),

– second threshold switches (9) connected to the second rectifying circuits (5) and having a turn-off delay time ($t'_A$), the outputs of said switches being connected to the first AND-circuit (10), and

– an inverter circuit consisting of a NOR-circuit (11) to which the sixth output signals ($U_8$) from the second threshold switches (9) are supplied for producing a selectivity signal [TOR(n+1)] for the preceding device (Fig. 2).

## Revendications

1. Procédé pour la détection et la coupure d'arcs électriques parasites dans des installations de bares omnibus, procédé caractérisé en ce qu'il comporte:

– la détection permanente de la tension des barres omnibus et sa comparaison avec des valeurs limites de tension obtenues expérimentalement et déterminées par la longueur des arcs électriques conditionnée par l'installation, qui définissent une gamme de tension correspondante,

– la détection permanente du courant des barres omnibus et sa comparaison avec une valeur limite prédéterminée du courant obtenue expérimentalement et déterminée par la puissance de court-circuit conditionnée par l'installation,

– la détection permanente de la teneur en harmoniques de la tension des barres omnibus et sa comparaison avec une valeur limite prédéfinie, et

– coupure, lorsque simultanément le courant des barres omnibus et l'amplitude des harmoniques de la tension des barres omnibus se situent au-dessus des valeurs limites prédéfinies, tandis que la tension des barres omnibus se situe à l'intérieur de l'étendue de tension prédéfinie.

2. Dispositif pour la détection et la coupure d'arcs électriques parasites dans des installations de barres omnibus en application du procédé selon la revendication 1, dispositif caractérisé en ce qu'il comporte:

- des convertisseurs de tension (1) et des premiers redresseurs (3), branchés à la suite, qui transforment la tension des barres omnibus ($U_R$, $U_S$, $U_T$) en une tension continue équivalente,
- un premier filtre (4) qui débarrasse la tension continue des harmoniques provoqués par le premier redresseur (3) et qui délivre un premier signal de sortie ($U_1$),
- un second filtre (6), revêtant la forme d'un passe-haut, prévu après le premier filtre (4) et qui n'amplifie que les harmoniques dont les fréquences se situent au-dessus de la fréquence des harmoniques prenant naissance du fait du redressement dans les premiers redresseurs (3), ce second filtre délivrant un second signal de sortie correspondant ($U_5$),
- un premier commutateur à valeur de seuil (7) branché à la suite du deuxième filtre (6) et qui délivre un troisième signal de sortie ($U_6$) lorsque l'amplitude du second signal de sortie ($U_5$) dépasse une valeur limite prédéfinie,
- un discriminateur (8) qui reçoit le premier signal de sortie ($U_1$) du premier filtre (4) et qui délivre un quatrième signal de sortie ($U_4$) lorsque la tension correspondant à la tension des barres omnibus ($U_R$, $U_S$, $U_T$) se situe à l'intérieur d'une gamme prédéfinie,
- des convertisseurs de courant (2) et des seconds redresseurs (5), branchés à la suite, qui convertissent le courant ($I_R$, $I_S$, $I_T$) des barres omnibus en un cinquième signal de sortie équivalent ($U_7$),
- un second commutateur à valeur de seuil (9) branché à la suite et qui délivre un sixième signal de sortie ($U_8$) lorsque le cinquième signal de sortie ($U_7$) dépasse une valeur limite prédéfinie,
- ainsi qu'une première porte ET (10) qui est reliée aux sorties du premier commutateur à valeur de seuil (7), du discriminateur (8), et du second commutateur à valeur de seuil (9), et qui délivre un signal de sortie (AUS) pour le déclenchement d'une protection lorsque simultanément le troisième, le quatrième, et le sixième signal de sortie ($U_6$, $U_4$, $U_8$) sont appliqués (fig. 1).

3. Dispositif selon la revendication 2 pour la coupure sélective de parties de l'installation qui sont respectivement protégées par un dispositif selon la revendication 2, dispositif caractérisé en ce qu'il comporte:
- un inverseur (11) branché à la suite du second commutateur à valeur de seuil (9), et qui reçoit le sixième signal de sortie ($U_8$) du second commutateur à valeur de seuil (9), et dont le signal de sortie [TOR(n)] sert à libérer ou à bloquer le dispositif branché en amont,
- ainsi qu'une première porte ET (10) qui reçoit en outre, un septième signal [TOR(n–1)] d'un dispositif branché à la suite et qui, lors de l'application simultanée du troisième, du quatrième et du sixième signal de sortie ($U_6$, $U_4$, $U_8$) ainsi que du septième signal [TOR(n–1)] du dispositif branché à la suite, délivre le signal de sortie (AUS) pour le déclenchement de la protection (fig. 1).

4. Dispositif selon revendication 2 ou 3, caractérisé en ce qu'il comporte:
- deux convertisseurs de tension (1) qui sont raccordés aux barres omnibus (R, S, T) et dont les raccordements secondaires sont reliés à un redresseur à six impulsions constitué de six diodes (D1 à D6) et jouant le rôle de premier redresseur (3),
- un premier filtre (4) constitué d'un circuit oscillant composé d'une inductance (L) et d'un condensateur (C1) et relié aux triplets cathodiques (D1, D3, D5) du premier redresseur (3), ce premier filtre (4) étant relié par l'intermédiaire d'une résistance (R1) au point médian (Mp) du circuit constitué par le triplet anodique (D2, D4, D6) du premier redresseur (3),
- un second filtre (6) constitué de résistances (R1 à R7) de condensateurs (C2 à C5) et de transistors (T1, T2),
- un organe RC (R8, C6) relié à la sortie du second filtre (6) et qui est relié par l'intermédiaire d'une diode (D7) branchée à la suite, au premier commutateur à valeur de seuil (7) dont la sortie est en liaison avec le premier organe ET (10),
- deux déclencheurs (B1, B2) avec des seuils de réponse différents, le premier déclencheur (B1) comportant le seuil de réponse le plus élevé et une temporisation de mise hors circuit ($t_A$) tandis que le second déclencheur (B2) comporte le seuil de réponse le plus bas à une temporisation de mise en cirucit ($t_E$),
- une porte NON-ET (B3) reliée aux sorties du déclencheur ($B_1$, $B_2$) et un second organe ET (B4) branché à la suite de l'organe NON-ET est également reliée à la sortie du second déclencheur (B2), cet organe ET délivrant le quatrième signal de sortie ($U_4$) du premier organe ET (10),
- des convertisseurs de courant (2) avec une charge (R9) qui détectent le courant des barres omnibus ($I_R$, $I_S$, $I_T$)
- de seconds redresseurs (5) constitués de diodes (D12 à D15) qui sont reliés au convertisseur de courant (2) par l'intermédiaire d'une protection contre les surtensions (R10, D8 à D11),
- de seconds commutateurs à valeur de seuil (9) avec une temporisation de mise hors circuit ($t'_A$) reliés au second redresseur (5), et qui, côté sortie, sont reliés à la première porte ET (10), ainsi que
- un inverseur constitué d'une porte NON-OU (11) qui reçoit les sixièmes signaux de sortie ($U_8$) su second commutateur à valeur de seuil (9), et qui engendre un signal de sélectivité [TOR(n+1)] pour le dispositif branché en amont (fig. 2).

Fig. 1

Fig. 2

Fig. 3

Fig. 4

Fig. 5